# EUROPEAN PATENT SPECIFICATION

(11) **EP 0 891 907 B1**
(45) Date of publication and mention of the grant of the patent: **12.02.2003**
(21) Application number: 98112773.1
(22) Date of filing: 09.07.1998
(51) Int. Cl.: B60T 17/04, F16L 3/00

(54) **A system for fixing a flexible pipe, particularly a pipe for the brake fluid of a motor vehicle**
Schlauchbefestigungssystem, insbesondere für einem Bremsflüssigkeitsschlauch eines Kraftfahrzeuges
Système de fixation d'un tuyau flexible, notamment un tuyau pour liquide de frein d'une automobile

(30) Priority: 11.07.1997 IT TO970620
(43) Date of publication of application: 20.01.1999
(73) Proprietor: FIAT AUTO S.p.A., 10135 Torino (IT)
(72) Inventor: Barengo, Angelo, 10035 Mazze (IT)
(74) Representative: Jorio, Paolo

(56) References cited:
- DE-A- 3 004 421
- DE-A- 3 031 975
- US-A- 2 678 864
- US-A- 3 771 751

## Description

The present invention concerns a system for fixing a flexible pipe, in particular, a pipe for the brake fluid of a motor vehicle and, in this particular example, for fixing a flexible brake pipe to a bracket fixed to an element of the motor vehicle, for example, the suspension of the motor vehicle, by resilient fastening means.

The brake fluid pipework of a motor vehicle is generally constituted by a main metal part firmly fixed beneath the body of the motor vehicle, and a flexible end part connected to the brake cylinders and not fixed to the main part, capable of absorbing the jolts and vibrations of the wheels; as is currently known, the flexible portion of the pipe is fixed adjacent the brakes to an element of the suspension or a shock absorber by means of a spring fork or, more simply, using a plastics tie strip of the type having a sliding clip.

A fixing system according to the preamble of claim 1 is known from DE-A-3 004 421.

However, these arrangements have disadvantages, such as the tendency for the pipe to become detached from the fixing element due to violent jerks of the suspension, or due to the spring fork loosening or the plastics strip breaking; on the other hand, if the pipe were more securely fixed by the fastening member, although it would avoid this disadvantage, it carries with it the risk of damaging the pipe over the long term and, therefore, does not completely eliminate the disadvantage.

The object of the present invention is therefore to produce a system for fixing a flexible pipe, in particular, a pipe for the brake fluid of a motor vehicle, free from the disadvantages of the systems currently in use and, more particularly, to produce a system for fixing the brake pipe which will be capable of retaining the pipe securely and firmly in all operating conditions of the motor vehicle, that is simple to use and economical.

In accordance with the above-defined objects, there is presented a system for fixing a flexible pipe comprising the features of independent claim 1.

There now follows a detailed description of a preferred embodiment of the invention, given by way of non-limitative example, with reference to the accompanying drawings in which:
Figure 1 is an external side view of the pipe fixing system according to the invention;
Figure 2 is a front view of the system of Figure 1;
Figure 3 is a perspective view of a fixing bracket used in the system of Figure 1; and
Figure 4 represents a fastener utilised to fix the tubing to the bracket of Figure 3.

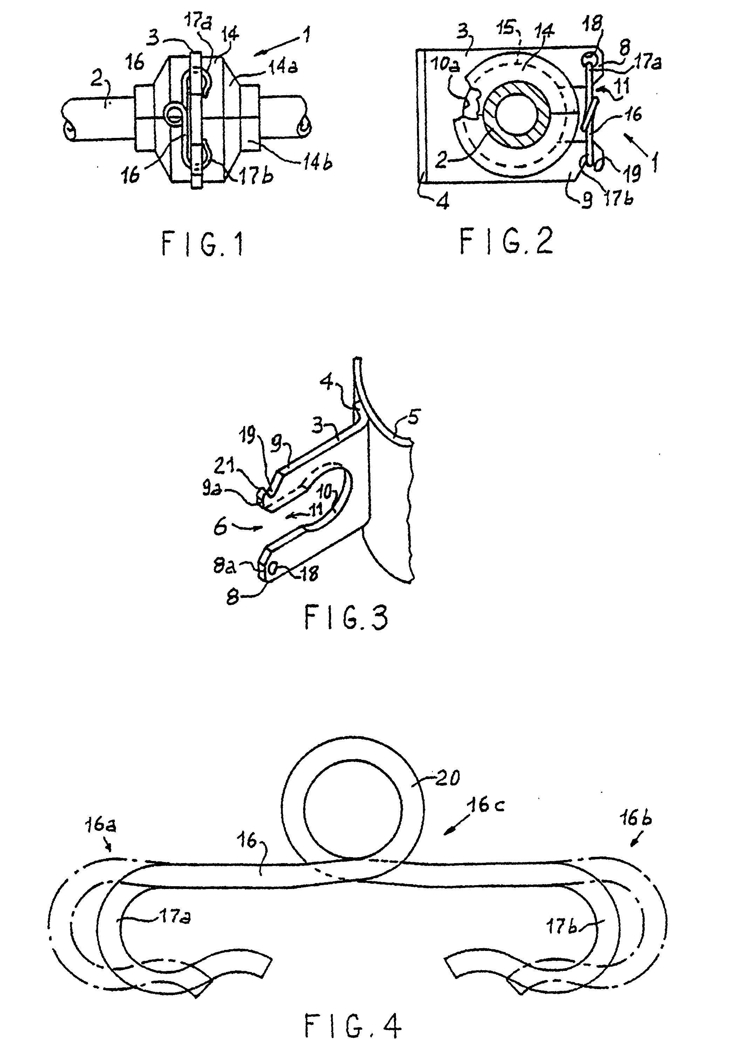

With reference to the drawings, the reference numeral 1 generally indicates the system according to the invention for fixing a pipe 2, in the non-limitative example illustrated, a brake pipe for a motor vehicle; the system 1 includes a support element 3 comprising a metal bracket formed by punching sheet steel; the bracket 3 is preferably, but not necessarily, provided on one side with a flange 4 bent at approximately 90°, capable of facilitating the fixing of the bracket 3, for example, by welding, to the side of a suspension mounting or to the cylindrical body 5 (Figure 3) of a shock absorber, close to a brake cylinder, not shown; the bracket 3 is shaped as a fork 6, delimited by a pair of arms 8 and 9 which define between them a circular seat 10 capable of holding the pipe 2; the seat 10 is partially open and communicates with an opening 11 delimited by two facing parallel edges of the two arms 8, 9; the pipe 2 can be inserted through the opening 11 into the seat 10 with little effort by elastically parting the arms 8, 9.

In order to protect the flexible pipe 2, usually formed from composite materials (for example, rubber reinforced with fabric or the like), from possible damage caused by accidental contact with the sharp edges of the bracket 3, the portion of the pipe engaged with the bracket 3 is covered by a sleeve 14 made from soft rubber, made in two halves 14a, 14b (Figure 1) and provided with a circular channel 15 substantially equal in size to the thickness of the bracket 3, capable of covering an inner edge 10a when it is inserted into the seat 10.

The pipe 2 inserted into the protective sleeve 14, which also functions to damp vibrations, is held securely in the seat 10 by means of the releasable fixing means formed from an elastic fastener 16 made from spring steel wire (piano wire steel) bent at its end 16a, 16b to form hooks 17a and 17b capable of engaging the engagement seats 18 and 19 formed at the ends 8a and 9a of the fork 6; in the central part 16c (Figure 4), the wire of the fastener 16 is folded back onto itself to form at least one elastic helical turn 20 capable of allowing small elastic excursions, particularly longitudinally, at the ends 16a and 16b.

The engagement seats 18 and 19 (Figure 3) comprise respectively a through-hole 18 formed on one of the arms, for example, the arm 8, and a support 19 formed on the outside of the other arm 9 of the fork 6.

In use, after having inserted the pipe 2, protected by the sleeve 14, into the seat 10, a first hook 17a of the fastener 16 is inserted with play in the through-hole 18 in such a way that the fastener 16 is able freely to rotate in the hole itself while remaining in the plane of the bracket 3; the second end 17b of the fastener 16 is capable of being engaged on the seat 19 of the arm 9, after having passed over a projection 21 of the end 9a by virtue of elastic deformation; the elastic deformation of the turn 20 puts the fastener 16 under tension between the ends 8a and 9a of the fork 6, which thus closes the opening 11, preventing the sleeve mounted on the tubing 2 from accidentally slipping out.

If necessary, the fastener 16 can be opened by disengaging its end 17b from the support 19, by overcoming the elastic tension of the turn 20.

As can be easily understood from the above, the fixing system according to the invention enables the pipe to be supported stably and securely close to the brake cylinders; the pipe 2 is therefore fixed onto the support 3 both longitudinally due to the action of the sleeve 14, forcibly inserted into the seat 10, and transversely by the elastic fastener 16 held firmly to close the opening 11.

## Claims

1. A system for fixing a flexible pipe such as a pipe (2) for the brake fluid of a motor vehicle, comprising a support element (3) for the pipe (2) fixed to a suspension mounting, and releasable fastener means (16) capable of securing the pipe (2) to the said support element (3), the said support element (3) is constituted by a substantially flat bracket (3) which is shaped as a fork (6) and provided with a partly-open seat (10) in communication with an opening (11) delimited by a pair of arms (8, 9) and capable of housing the pipe (2), **characterised in that** the said releasable fastener means (16) are constituted by an elastic fastener (16) provided at its ends with engagement members (17) capable of engaging corresponding engagement seats (18, 19) formed on the said arms (8, 9) to close the opening (11).

2. A fixing system according to Claim 1, **characterised in that** the said engagement seats (18, 19) are constituted respectively by a through-hole (18) formed in an end (8a) of one of the said arms (8) and capable of housing one of the said engagement members (17a), and a support (19) formed on an outer side of the end (9a) of another of the said arms (9) and capable of housing another of the said engagement members (17b).

3. A fixing system according to Claim 1 or Claim 2, **characterised in that** the said fastener (16) is constructed using spring steel wire and is shaped at its ends (16a, 16b) in the form of hooks (17a, 17b), and is bent in the central part (16c) to form at least one helical turn (20) capable of holding the said fastener (16) elastically extended between the said engagement seats (18, 19).

4. A fixing system according to any preceding claim, **characterised in that** it includes a protective sleeve (14) for covering the said pipe (2), mounted coaxially of the pipe itself; the said protective sleeve (14) being provided with a circular channel (15) capable of engaging an inner edge (10a) of the said seat (10).

## Patentansprüche

1. Anordnung zum Befestigen einer flexiblen Rohrleitung beispielsweise einer Rohrleitung (2) für das Bremsfluid eines Kraftfahrzeuges, mit einem Halteelement (3) für die Rohrleitung (2), das an einer Aufhängebefestigungseinrichtung befestigt ist, und einer lösbaren Festhalteeinrichtung (16), die die Rohrleitung (2) am Halteelement (3) festhalten kann, wobei das Halteelement (3) aus einem im Wesentlichen ebenen Träger (3) besteht, der als Gabel (6) geformt ist und mit einem teilweise offenen Sitz (10) in Verbindung mit einer Öffnung (11) versehen ist, der von zwei Armen (8, 9) begrenzt wird und die Rohrleitung (2) aufnehmen kann, **dadurch gekennzeichnet, dass** die lösbare Festhalteeinrichtung (16) aus einem elastischen Halter (16) besteht, der an seinen Enden mit Eingriffselementen (17) versehen ist, die in entsprechende Eingriffssitze (18, 19) eingreifen können, die an den Armen (8, 9) ausgebildet sind, um die Öffnung (11) zu schließen.

2. Befestigungsanordnung nach Anspruch 1, **dadurch gekennzeichnet, dass** die Eingriffssitze (18, 19) jeweils aus einem durchgehenden Loch (18), das in einem Ende (8a) eines der Arme (8) ausgebildet ist und eines der Eingriffselemente (17a) aufnehmen kann, und einer Halterung (19) bestehen, die an einer Außenseite des Endes (9a) des anderen Armes (9) ausgebildet ist und das andere Eingriffselement (17b) aufnehmen kann.

3. Befestigungsanordnung nach Anspruch 1 oder 2, **dadurch gekennzeichnet, dass** der Halter (16) unter Verwendung eines Federstahldrahtes gebildet und an seinen Enden (16a, 16b) in Form von Haken (17a, 17b) geformt und im mittleren Teil (16c) so gebogen ist, dass wenigstens eine schraubenförmige Windung (20) gebildet ist, die den Halter (16) elastisch gedehnt zwischen den Eingriffssitzen (18, 19) halten kann.

4. Befestigungsanordnung nach einem vorhergehenden Anspruch, **dadurch gekennzeichnet, dass** sie eine Schutzhülse (14) zum Abdecken der Rohrleitung (2) einschließt, die koaxial zur Rohrleitung selbst angebracht ist, welche Schutzhülse (14) mit einem kreisförmigen Kanal (15) versehen ist, der mit einem inneren Rand (10a) des Sitzes (10) in Eingriff kommen kann.

## Revendications

1. Système de fixation d'un tuyau flexible, notamment d'un tuyau pour liquide de frein d'un véhicule automobile, comprenant un élément de support (3) du tuyau (2) fixé à un élément de suspension et des moyens d'attache amovibles (16) capables de fixer le tuyau (2) audit élément de support (3), ledit élément de support (3) étant constitué par un support généralement plat (3) qui présente la forme d'une fourche (6) et qui comporte un siège partiellement ouvert (10) communiquant avec une ouverture (11) délimitée par une paire de bras (8, 9) et capable de loger le tuyau (2), **caractérisé en ce que** lesdits moyens d'attache amovibles (16) sont constitués par une attache élastique (16) comportant à ses deux extrémités des éléments d'engagement (17) capables de s'engager dans des sièges d'engagement correspondants (18, 19) formés sur lesdits bras (8, 9) pour fermer l'ouverture (11).

2. Système de fixation selon la revendication 1, **caractérisé en ce que** lesdits sièges d'engagement (18, 19) sont constitués respectivement par un trou traversant (18) formé dans une extrémité (8a) de l'un desdits bras (8) et capable de recevoir l'un des éléments d'engagement (17a), et un support (19 formé sur un côté extérieur de l'extrémité (9a) d'un autre desdits bras (9) et capable de recevoir un autre desdits éléments d'engagement (17b).

3. Système de fixation selon la revendication 1 ou la revendication 2, **caractérisé en ce que** ladite attache (16) est réalisée en utilisant un fil d'acier à ressort et présente la forme à ses extrémités (16a, 16b) de crochets (17a, 17b), et est recourbée dans sa partie centrale (16c) pour former au moins une spire hélicoïdale (20) capable de maintenir l'attache élastique (16) étendue élastiquement entre les sièges d'engagement (18, 19).

4. Système de fixation selon l'une des revendications précédentes, **caractérisé en ce qu'**il comporte un manchon protecteur (14) pour couvrir le tuyau (2), monté coaxialement au tuyau lui-même, ledit manchon protecteur (14) comportant une rainure circulaire (15) capable de recevoir un bord intérieur (10a) dudit siège (10).
